# EUROPÄISCHE PATENTSCHRIFT

(11) **EP 0 791 425 B1**
(45) Veröffentlichungstag und Bekanntmachung des Hinweises auf die Patenterteilung: **09.10.2002**
(21) Anmeldenummer: 97102498.9
(22) Anmeldetag: 17.02.1997
(51) Int. Cl.: B23P 19/04

(54) **Verfahren und Vorrichtung zum Entfernen beschädigter Bauele-mente von Paletten**
Method and device for removing damaged elements from pallets
Procédé et dispositif pour enlever des éléments endommagés des palettes

(30) Priorität: 24.02.1996 DE 19607027
(43) Veröffentlichungstag der Anmeldung: 27.08.1997
(73) Patentinhaber: Krahl, Hans, 25494 Borstel-Hohenraden (DE)
(72) Erfinder: Krahl, Hans, 25494 Borstel-Hohenraden (DE)
(74) Vertreter: Thomas, Götz

(56) Entgegenhaltungen:
- EP-A- 0 370 731
- DE-A- 4 308 580
- DE-C- 4 435 574
- GB-A- 2 271 310
- US-A- 5 307 554

## Beschreibung

Die Erfindung betrifft ein Verfahren und eine Vorrichtung zum Entfernen beschädigter Bauelemente von Paletten, bei welchem einander jeweils benachbarte, durch Nägel, Schrauben oder dergleichen Verbindungselemente zusammengehaltene Bauelemente einer Palette durch gegenseitige Annäherung von mehreren, zwischen die benachbarten Bauelemente eindringenden und die Verbindungselemente abscherenden Schermessern einerseits und mindestens einem zur Abstützung mindestens eines Teils der Bauelemente dienenden Widerlager andererseits voneinander getrennt werden.

Paletten werden in breitem Umfang als Unterlage für Waren oder andere Güter verwendet, um die Stapelbarkeit und/oder den Transport der Güter zu erleichtern. Die Mehrzahl der verwendeten Paletten besteht aus hölzernen Bauelementen, wie Brettern, Klötzen und Balken, welche im Bereich ihrer jeweiligen Anlageflächen durch Nägel, Schrauben oder ähnliche Verbindungselemente miteinander verbunden sind. Die meisten Paletten sind verhältnismäßig robust ausgebildet, damit sie den Beanspruchungen bei der Handhabung und insbesondere beim Transport mit einem Gabelstapler standhalten. Trotzdem kommt es beim Umsetzen der Paletten nicht selten zu Beschädigungen einzelner Bauelemente, insbesondere von randseitig angeordneten Brettern und Klötzen, welche beim Anstoßen gegen andere Paletten, beim Aufnehmen durch den Gabelstapler oder bei einem ungleichmäßigen Absetzen den größten Belastungen ausgesetzt sind.

Da bei einer Beschädigung der Palette die Gefahr einer Beeinträchtigung der darauf gestapelten oder transportierten Güter besteht, müssen beschädigte Paletten aussortiert werden. Diese aussortierten Paletten wurden in der Vergangenheit zumeist durch Verbrennen entsorgt. Allerdings sind in den letzten Jahren die Kosten für die Entsorgung derart gestiegen, daß Paletten zunehmend einer Wiederverwendung zugeführt werden, was auch aus Umweltgesichtspunkten sinnvoll ist.

Als Grundlage für die Wiederverwendung werden die Paletten im allgemeinen in ihre Bestandteile zerlegt, wobei brauchbare Bretter, Klötze und Balken beim Zusammenbau neuer Paletten eingesetzt werden, so daß nur das wirklich unbrauchbare Material z.B. durch Verbrennen entsorgt werden muß. Da das Zerlegen von Paletten eine schwere körperliche Arbeit ist, insbesondere, wenn es sich bei den Paletten um wiederverwendbare europäische Vierweg-Flachpaletten aus Holz (nachfolgend mit dem gebräuchlicheren Begriff "Euro-Palette" bezeichnet) handelt, welche hinsichtlich der Anzahl, Stärke und Anordnung der Verbindungselemente bestimmte Anforderungen erfüllen müssen, werden auf dem Markt bereits Maschinen angeboten, welche die Arbeit beim Zerlegen von Paletten erleichtern.

Auf diesen Maschinen werden gewöhnlich die Verbindungselemente in den Trennfugen zwischen den Bauteilen durchtrennt, wobei sie entweder mit sogenannten Palettensägen durchgesägt oder mit hydraulisch betätigten Schermessern abgeschert werden.

Eine Vorrichtung der zuletzt genannten Art wird über die Firma N.V. Het Groendom in Kapellen, Belgien vertrieben, die ein Zerlegen der Paletten in ihre Einzelteile unter Abscheren der Verbindungselemente zwischen jeweils zwei benachbarten Bauelementen ermöglicht. Die Vorrichtung besitzt zwei zueinander parallele Messer mit einer die Palettenbreite übersteigenden Länge, von denen eines feststehend ist und als Widerlager dient, während das andere hydraulisch beweglich ist. Eine zu zerlegende Palette wird mit einer Auflagefläche, beispielsweise den Unterseiten der Querbretter auf die Messer aufgelegt, die in auseinandergefahrenem Zustand einen solchen Abstand aufweisen, daß ein oder mehrere über die Auflagefläche überstehende Bauelemente, beispielsweise drei Klötze und ein zugehöriges Bodenbrett zwischen den Messern nach unten ragt. Bei einer anschließenden gegenseitigen Annäherung der Messer durch Verschiebung des beweglichen Messers dringt dieses in die Trennfuge zwischen dem überstehenden Bauelement und der Auflagefläche ein und schert dort die Verbindungselemente quer zu ihrer Längsrichtung ab, so daß das überstehende Bauelement nach unten in einen Auffangbehälter fällt. Da die Palette immer mit einer Auflagefläche auf den Messern aufliegen muß, um ein Eindringen der Messer in die Trennfuge zwischen zwei benachbarten Bauelementen sicherzustellen, muß bei dieser Vorrichtung ein beschädigtes Bodenrandbrett einer Euro-Palette zuerst zusammen mit den drei daran befestigten Klötzen entfernt werden, bevor es nach einer Entnahme aus dem Auffangbehälter von den letzteren getrennt werden kann. Dies verursacht einen verhältnismäßig hohen Zeitaufwand, der durch die zusätzliche Arbeit beim Wiederanbringen der Klötze noch vergrößert wird. Entsprechendes gilt für die Entfernung beschädigter Klötze.

Aus der DE 44 35 574 C1 (nicht vorveröffentlicht) ist weiter eine Vorrichtung der eingangs genannten Art bekannt, bei der die Palette auf einem als Widerlager dienenden Palettenschlitten horizontal in Richtung eines ortsfesten Messersystems geschoben wird, das jeweils ein oberes Schneidsystem zum Abtrennen von Deckbrettern und ein unteres Schneidssystem zum Abtrennen von Bodenbrettern aufweist. Jedes der beiden Schneidsysteme umfaßt mehrere nebeneinander angeordneten Messer, die einzeln vertikal verstellbar sind und nach einer visuellen Schadensermittlung selektiv nach unten bzw. oben vor die zu entfernenden Bauelemente gefahren werden, bevor der Palettenschlitten mit der Palette senkrecht dazu durch das Messersystem geschoben wird. Die bekannte Vorrichtung gestattet es zwar, mit Hilfe des oberen Schneidsystems die Verbindungselemente zwischen den Deckbrettern und den darunter angeordneten Querbrettern und mit Hilfe des unteren Schneidsystems die Verbindungselemente zwischen den Bodenbrettern und den darüber angeordneten Klötzen abzuscheren, jedoch können die Verbindungselemente zwischen Querbrettern und darunter angeordneten Klötzen weder mit dem oberen Schneidsystem noch mit dem unteren Schneidsystem abgeschert werden, so daß sich beschädigte Klötze mit der bekannten Vorichtung nicht entfernen lassen. Außerdem ist die bekannten Vorrichtung verhältnismäßig kompliziert aufgebaut und benötigt eine Vielzahl von verstellbaren Schermessern.

Weitere Vorrichtungen zum Zerlegen von Paletten sind in der US-A-5,307,554, der US-A-5,463,808 und in der FR-A-2 586 961 offenbart.

Ausgehend hiervon liegt der Erfindung die Aufgabe zugrunde, ein Verfahren und eine Vorrichtung der eingangs genannten Art dahingehend zu verbessern, daß sich häufig beschädigte Bauelemente, wie Boden- und Deckrandbretter und an den Schmalseiten angeordnete Klötze für einen Austausch gezielt einzeln und schnell unter Durchtrennen einer minimalen Anzahl von Verbindungselementen entfernen lassen.

Diese Aufgabe wird erfindungsgemäß durch die Merkmale gelöst, die im kennzeichnenden Teil des Patentanspruchs 1 für das Verfahren bzw. im kennzeichnenden Teil des Patentanspruchs 8 für die Vorrichtung aufgeführt sind. Danach zeichnen sich das erfindungsgemäße Verfahren und die erfindungsgemäße Vorrichtung dadurch aus, daß die Schermesser in Abhängigkeit von der Anzahl und Lage der abzuscherenden Verbindungselemente zwischen einem beschädigten Bauelement einerseits und einem oder mehreren benachbarten Bauelementen andererseits einzeln oder gemeinsam in Annäherungsrichtung gegenüber der Palette verschoben werden bzw. verschiebbar sind. Der Erfindung liegt der Gedanke zugrunde, die Verbindungselemente nur an denjenigen Stellen abzuscheren, an denen ein beschädigtes Bauelement mit einem oder mehreren benachbarten Bauelementen verbunden ist, wobei das Abscheren der Verbindungselemente zur Minimierung der erforderlichen Arbeitszeit an sämtlichen in einer Ebene liegenden Verbindungsstellen gleichzeitig erfolgt, um ein Verschieben oder Umsetzen der Palette weitgehend zu vermeiden.

Die Verschiebung der Schermesser in Bezug zur Palette erfolgt bevorzugt dadurch, daß die Schermesser beweglich gelagert sind und einzeln oder gemeinsam zwischen das beschädigte Bauelement und ein oder mehrere benachbarte Bauelemente verschoben werden, wobei das beschädigte Bauelement und mindestens eines der benachbarten Bauelemente oder ein anderes Bauelement der Palette durch mehrere, in Bewegungsrichtung der Schermesser ortsfeste Widerlager abgestützt werden, welche verhindern, daß sich die genannten Bauelemente infolge der von den Schermessern ausgeübten Kräfte in Bewegungsrichtung der Schermesser verschieben.

Um beim Abscheren der Verbindungselemente ein Ausweichen der Palette in seitlicher Richtung zu vermeiden, weist die Vorrichtung gemäß einer bevorzugten Ausgestaltung der Erfindung einen Anschlag mit einer zur Bewegungsrichtung der Schermesser parallelen Anschlagfläche auf, gegen welche die Palette vor dem Abscheren der Verbindungselemente mit einer ihrer Schmalseiten angelegt werden kann.

Eine weitere bevorzugte Ausgestaltung der Erfindung sieht vor, daß jedem Schermesser ein Widerlager zugeordnet ist, welches beim Abscheren der Verbindungselemente zwischen dem beschädigten Bauelement und einem benachbarte Bauelement entweder das erstere oder das letztere abstützt. Vorzugsweise sind die Widerlager so angeordnet, daß sich sowohl das beschädigte Bauelement als auch benachbarte Bauelemente gegen eines der Widerlager abstützen können.

Um sicherzustellen, daß die Schermesser bei einer Annäherung an die zugehörigen Widerlager genau in die Trennfuge zwischen dem beschädigten Bauelement und einem oder mehreren benachbarten Bauelementen geschoben werden, sieht eine weitere bevorzugte Ausgestaltung der Erfindung vor, daß die Palette und vorzugsweise das beschädigte Bauelement oder ein benachbartes Bauelement beim Abscheren der Verbindungselemente an einem Teil der Verbindungsstellen auf den Schermessern aufliegt, so daß sich diese an der Unterseite des aufliegenden Bauelements entlang in die Trennfuge bewegen.

Da dies jedoch nicht an allen Verbindungsstellen möglich ist, sieht eine weitere bevorzugte Ausgestaltung der erfindungsgemäßen Vorrichtung eine Hubvorrichtung vor, die es gestattet, die Palette in Bezug zu den Schermessern anzuheben, um diese ohne ein Drehen oder Wenden der Palette nacheinander mit mindestens zwei übereinander angeordneten parallelen Trennfugen zur Ausrichtung zu bringen. Vorzugsweise finden als Hubvorrichtung vertikal verfahrbare Widerlager Verwendung, die sich zweckmäßig zwischen mindestens zwei Stellungen verfahren lassen, wobei in einer ersten Stellung ihre Oberseite mit der Oberseite der Schermesser fluchtet, so daß zum Beispiel beschädigte Deck- oder Bodenrandbretter beim Entfernen sowohl auf den Schermessern und auf den Widerlagern aufliegen. In einer zweiten Stellung sind die Oberseiten der Widerlager um die Stärke der Querbretter gegenüber den Oberseiten der Schermesser angehoben, so daß diese beim Verschieben genau in die Trennfuge zwischen einem Querbrett und einem benachbarten Klotz eindringen. Da die Stärke der Querbretter bei Euro-Paletten genormt ist, können bei Vorrichtungen zur Reparatur von Euro-Paletten feste Endstellungen vorgesehen sein, während ansonsten höhenverstellbare Anschläge bevorzugt werden, die je nach Stärke der Bauelemente eine Einstellung unterschiedlicher Hubhöhen der Widerlager ermöglichen. Eine dritte Stellung kann um die Stärke eines Klotzes über der zweiten Stellung liegen, so daß sich die Verbindungselemente zwischen Klötze und benachbarten Querbrettern bzw. Bodenbrettern ohne ein Umdrehen der Palette abscheren lassen.

Im folgenden wird die Erfindung anhand eines in der Zeichnung dargestellten Ausführungsbeispiels näher beschrieben. Es zeigen:
Fig. 1: eine perspektivische Ansicht einer erfindungsgemäßen Vorrichtung zum Entfernen beschädigter Bauelemente von Paletten;
Fig. 2: eine teilweise geschnittene Vorderseitenansicht der Vorrichtung;
Fig. 3: eine teilweise geschnittene Draufsicht auf die Vorrichtung;
Fig. 4: einen vergrößerten Schnitt durch die Vorrichtung entlang der Linie IV-IV der Fig. 3;
die Figuren 5 bis 8: zwei Seitenansichten, eine Draufsicht und eine Unterseitenansicht einer Euro-Palette, um die in Bezug auf Paletten verwendeten Begriffe zu erläutern.

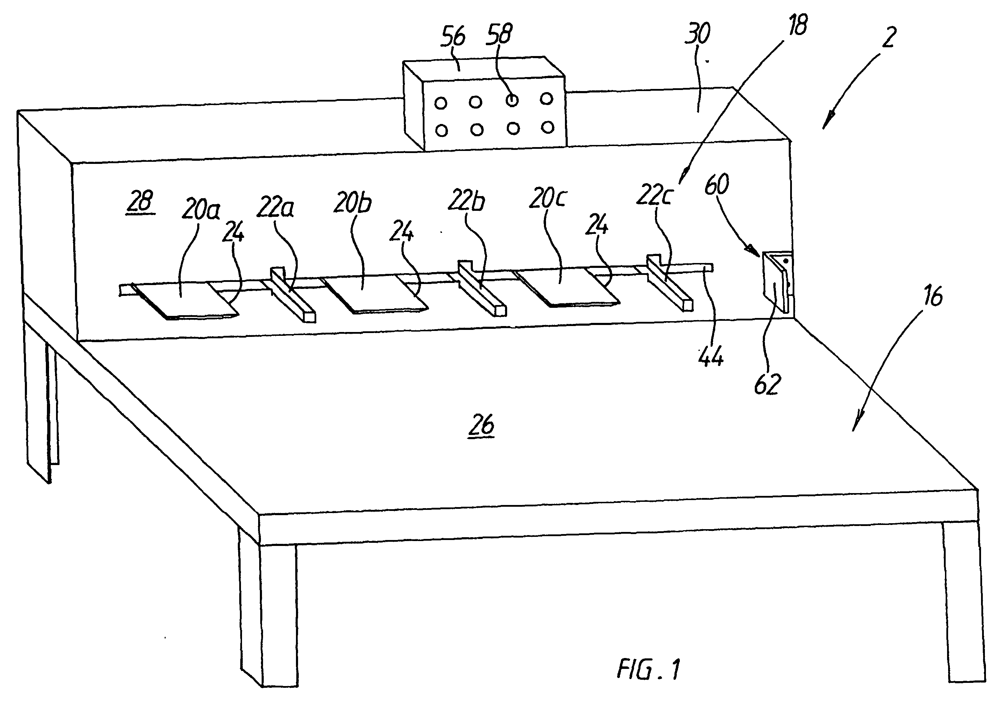

Die in den Figuren 1 bis 4 dargestellte Vorrichtung 2 dient dazu, im Zuge einer Reparatur beschädigter Euro-Paletten 4 einzelne schadhafte Bauelemente gezielt zu entfernen, um sie anschließend durch neue Bauelemente zu ersetzen.

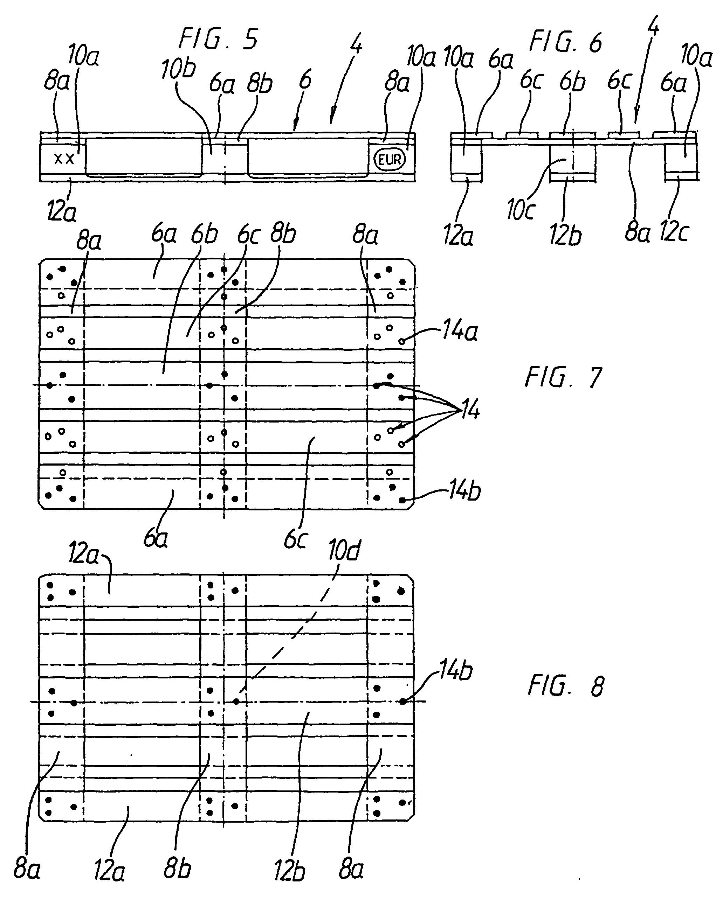

Wie in den Figuren 5 bis 8 dargestellt, bestehen die sogenannten Euro-Paletten 4 aus einer Mehrzahl von hölzernen Bauelementen, und zwar insgesamt fünf parallelen Deckbrettern 6, nämlich zwei äußeren Deckrandbrettern 6a, einem Deckmittelbrett 6b und zwei dazwischen angeordneten Deckinnenbrettern 6c, welche parallel zu den längeren Schmalseiten der Palette 4 angeordnet sind, insgesamt drei Querbrettern 8, nämlich zwei randseitigen Querbrettern 8a und einem mittleren Querbrett 8b, welche parallel zu den kürzeren Schmalseiten der Palette 4 unterhalb der Deckbretter 6 an deren entgegengesetzten Stirnenden bzw. in deren Mitte angeordnet sind, insgesamt neun Klötzen 10, die jeweils an den Überlappungsstellen der Deckrandbretter 6a und des Deckinnenbretts 6c einerseits und der Querbretter 8 andererseits unterhalb der letzteren angeordnet sind, sowie drei Bodenbrettern 12, und zwar zwei Bodenrandbrettern 12a und einem Bodenmittelbrett 12b, welche jeweils drei in Richtung der Deck- oder Bodenbretter 6 bzw. 12 der Palette 4 hintereinander angeordnete Klötze 10 miteinander verbinden, wobei vier Klötze 10a an den Ecken der Palette, zwei Klötze 10b in der Mitte der längeren Schmalseite, zwei Klötze 10c in der Mitte der kürzeren Schmalseite und ein Klotz 10d in der Palettenmitte angeordnet ist.

Diese Bauelemente, d.h die Deckbretter 6, die Querbretter 8, die Klötze 10 und die Bodenbretter 12 werden durch Verbindungselemente 14 zusammengehalten, welche insgesamt mindestens 24 Nägel 14a und 54 Schraubennägel 14b umfassen, die jeweils zu dreien oder zu vieren in einem vorgegebenen Muster von oben und unten her durch die Deckbretter 6 und die Querbretter 8 bzw. durch die Bodenbretter 12 in die Klötze 10 eingeschlagen sind.

Die Erfahrung hat gezeigt, daß die genannten Bauelemente 6, 8, 10, 12 bei der Handhabung der Paletten 4 nicht in gleichem Umfang beschädigt werden, sondern daß es vor allem die Deckrandbretter 6a und die Bodenrandbretter 12a sowie die äußeren Klötze 10a, 10b und 10c sind, die beim Umsetzen durch Gabelstapler, durch Anstoßen gegen Hindernisse oder durch ungleichmäßiges Absetzen brechen, reißen oder auf sonstige Weise so stark beschädigt werden, daß eine Weiterverwendung der Palette 4 ohne eine vorherige Reparatur zu einer Gefährdung der transportierten oder gestapelten Güter führen könnte. Paletten 4, bei denen auch Deckinnenbretter 6c, das Deckmittelbrett 6b, einzelne Querbretter 8 und/oder der mittlere Klotz 10d beschädigt sind, weisen in den meisten Fällen einen derart schlechten Erhaltungszustand auf, daß eine Reparatur nicht mehr lohnend ist. Aus diesem Grund ist für die meisten Reparaturbetriebe eine Vorrichtung ausreichend, die es gestattet, die randseitigen Bauelemente der Paletten 4, und insbesondere die Deckrandbretter 6a, die Bodenrandbretter 12a und die äußeren Klötze 10a, 10b und 10c der am weitesten verbreiteten Euro-Paletten und von Paletten mit ähnlichen Abmessungen für einen nachfolgenden Austausch gegen ein neues Bauelement zu entfernen.

Diese Vorgabe wird durch die in den Figuren 1 bis 4 dargestellte Vorrichtung 2 erfüllt, die im wesentlichen aus einem Palettenablagetisch 16 und einer auf dem hinteren Teil des Ablagetischs 16 angeordneten Abschereinrichtung 18 zum Abscheren der Verbindungselemente 14 zwischen benachbarten Bauelementen 6, 8, 10, 12 der Palette 4 besteht.

Die Abschereinrichtung 18 umfaßt im wesentlichen drei hydraulisch in horizontaler Richtung verschiebbare Schermesser 20a, 20b, 20c und drei Widerlager 22a, 22b, 22c, die jeweils einer Schneidkante 24 der Schermesser 20 gegenüberliegen. Die Schermesser 20 und die Widerlager 22 stehen parallel zu einer oberen Ablagefläche 26 des Ablagetischs 16 nach vorne über eine als Anschlagfläche für die Paletten dienende vordere Wand 28 eines Gehäuses 30 der Abschereinrichtung 18 über.

Die aus gehärtetem Stahl bestehenden flachen plattenförmigen Schermesser 20 besitzen eine Stärke von etwa 5 mm und weisen an ihrem dem zugehörigen Widerlager 22 zugewandten Stirnende auf ihrer Unterseite eine Abschrägung auf, durch welche die scharfe Schneidkante 24 gebildet wird. Der Abstand der Schneidkanten 24 zweier benachbarten Schermesser 20a, 20b; 20b, 20c entspricht im wesentlichen dem Abstand zwischen zwei benachbarten Querbrettern 8a, 8b einer Euro-Palette 4, während der Abstand zwischen der Schneidkante 24 eines Schermessers 20a, 20b, 20c und dem zugehörigen Widerlager 22a, 22b, 22c vor der Annäherung etwas größer als die größte Breite der Klötze 10 ist, so daß jeweils eines der Schermesser 20a, 20b, 20c und das zugehörige Widerlager 22a, 22b, 22c auf entgegengesetzten Seiten eines Querbretts 8 oder Klotzes 10 angeordnet sind, wenn die Euro-Palette mit einer ihrer beiden längeren Schmalseiten gegen die von der Gehäusewand 28 gebildete Anschlagfläche anliegt.

Der Abstand der Schermesser 20 und der Widerlager 22 von der Ablagefläche 26 entspricht ungefähr der Gesamthöhe einer Euro-Palette 4, so daß diese an ihrer der Anschlagfläche 28 zugewandten Schmalseite um etwa 20 mm angehoben werden muß, um die Palette 4 je nach Ausrichtung mit der Unterseite der Deckrandbretter 6a oder der nach unten weisende Oberseite der Bodenrandbretter 12a auf das mittlere und rechte Schermesser 20b und 20c aufzulegen. Der Zwischenraum zwischen der Ablagefläche 26 und der angehobenen Palette 4 ermöglicht es zum einen, daß die Palette 4 beim Eindringen der Schermesser 20 in eine Trennfuge zwischen den jeweils benachbarten Bauteilen 6, 8, 10, 12 entsprechend der Materialstärke der Schermesser 20 etwas nach unten zu ausweichen kann, und verhindert zum anderen, daß kleinere, auf der Ablagefläche 26 liegen bleibende Palettenbruchstücke eine genaue Ausrichtung der Schermesser 20 mit der Trennfuge behindern.

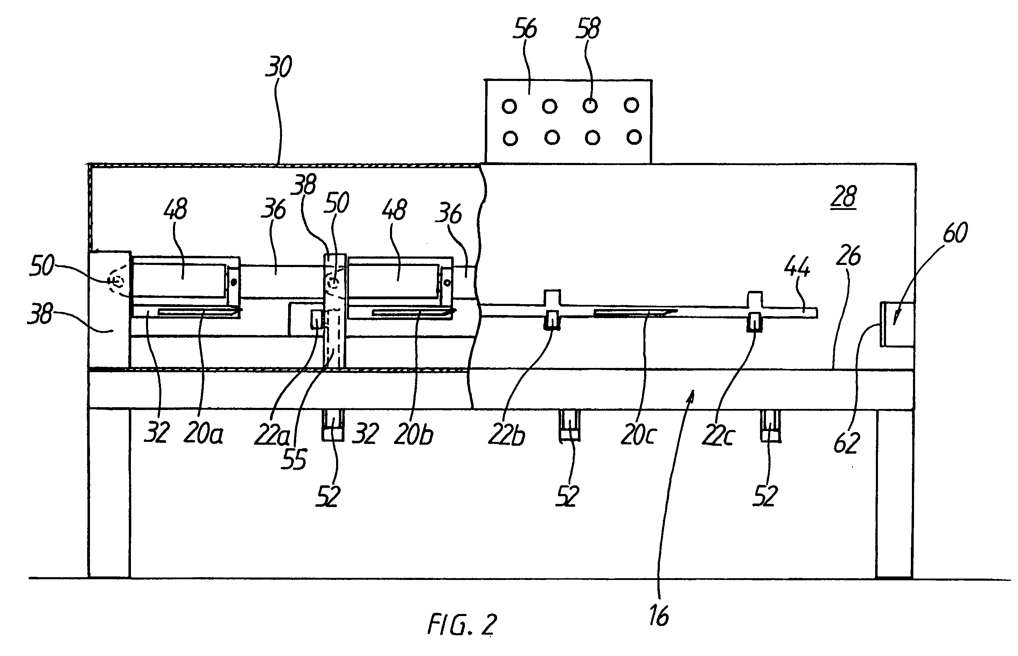

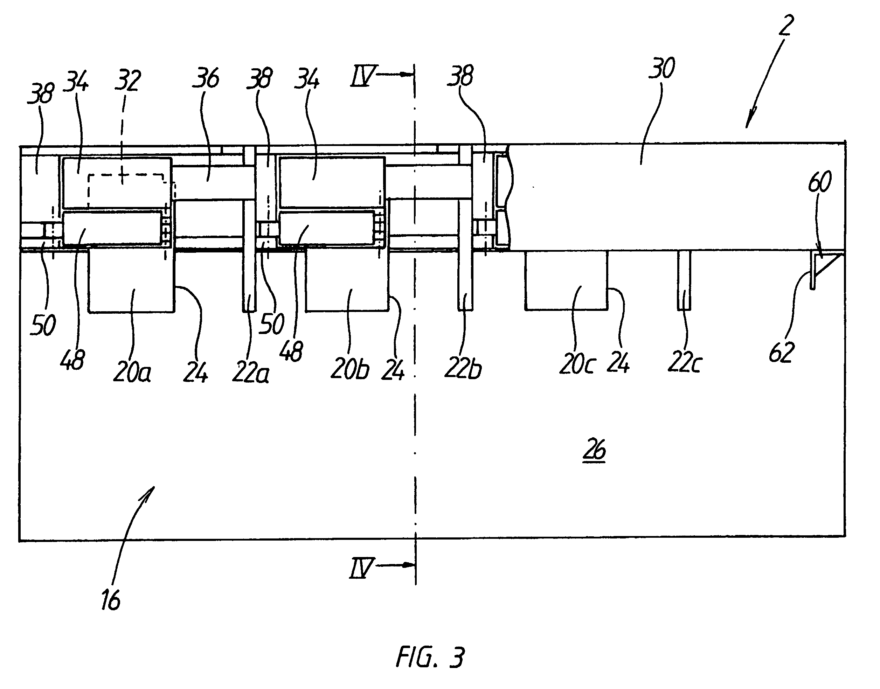

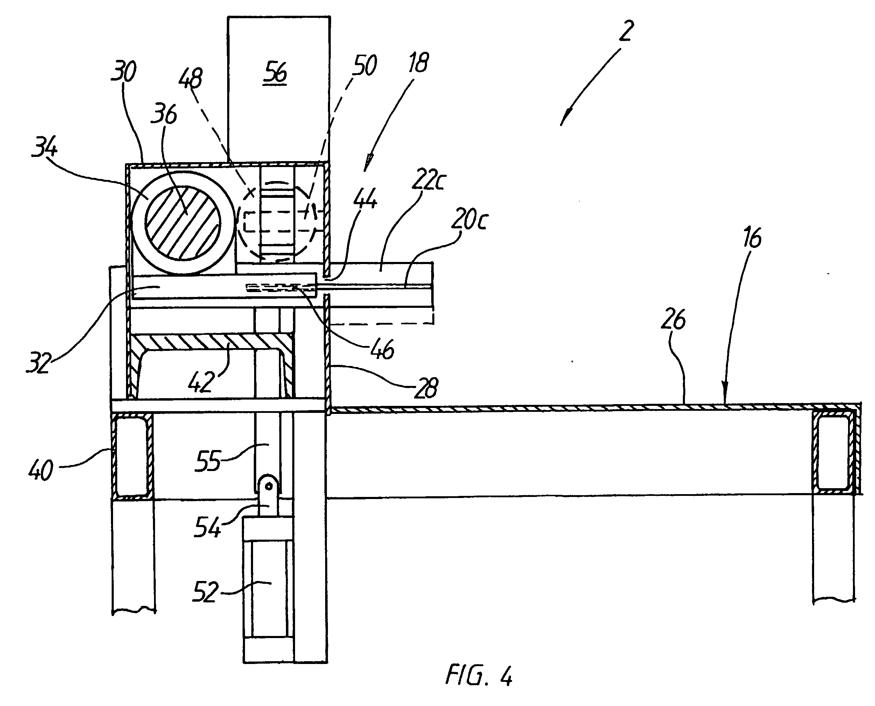

Die Schermesser 20a, 20b, 20c sind jeweils einzeln auf zugehörigen Messerträgern 32 befestigt, die innerhalb des Gehäuses 30 mit Hilfe von Gleitlagern 34 entlang einer Gleitführung 36 verschiebbar sind, welche als durchgehende massive Rundwelle ausgebildet ist (Fig. 4) und sich über zwei stirnseitige und drei im Abstand dazwischen angeordnete Traglager 38 (Fig. 2 und 3) auf einem um die Vorrichtung 2 umlaufenden Rechteckträger 40 bzw. einem Längsträger 42 mit U-Profil abstützt. Die Schermesser 20 greifen jeweils in einen Aufnahmeschlitz 46 im Messerträger 32 ein und sind mit Schrauben (nicht dargestellt) befestigt, welche das Schermesser 20 im Aufnahmeschlitz 46 festklemmen, wobei sie Langlöcher (nicht dargestellt) in den Schermessern 20 durchsetzen, so daß stumpf gewordene Schermesser 20 nachgeschliffen und beim erneuten Einsetzen in den Aufnahmeschlitz 46 zum Ausgleich des Materialabtrags beim Schleifen etwas in Richtung des zugehörigen Widerlagers 22 verschoben werden können. Die Schermesser 20 treten durch einen horizontalen Austrittsschlitz 44 in der vorderen Gehäusewand 28 hindurch, der sich über einen Großteil der Breite der Gehäusewand 28 erstreckt.

Die Messerträger 32 werden mit Hilfe von drei doppeltwirkenden Hydraulikzylindern 48 verschoben, die jeweils zwischen einem der Messerträger 32 und einem an den ortsfesten Traglagern 38 vorgesehenen Zylinderlager 50 angeordnet sind und über getrennte Schaltventile mit einer Hydraulikpumpe (nicht dargestellt) verbunden sind, so daß sie je nach Schaltstellung der Schaltventile einzeln oder gemeinsam mit Drucköl beaufschlagt werden können, um einen oder mehrere Messerträger 32 mit dem Schermesser 20 in Richtung des zugehörigen Widerlagers 22 zu verschieben, das in Bewegungsrichtung der Schermesser 20 ortsfest ist.

Die Widerlager 22 bilden einen Teil einer Hubvorrichtung, die es gestattet, eine mit der Unterseite eines Deckrandbretts 6a auf der Oberseite der Schermesser 20b, 20c aufliegende Palette 4 um die Brettstärke der Querbretter 8 anzuheben, um die Schermesser 20 in einer Ebene mit der Trennfuge zwischen den Stirnenden der Querbretter 8 und den benachbarten Klötzen 10a, 10b auszurichten, bevor dort die Verbindungselemente 14 an sämtlichen oder an einem Teil der Verbindungsstellen abgeschert werden.

Die Widerlager 22 in Form von massiven, bis zur Rückseite des Gehäuses 30 verlaufenden Rechteckprofilen sind dazu innerhalb des Gehäuses 30 in vertikaler Richtung zwischen zwei Endstellungen verfahrbar, wobei ihre Oberseiten in der unteren Endstellung (Figuren 1 und 2) mit den Oberseiten der Schermesser 20 fluchten, während sie in der oberen Endstellung um die Brettstärke der Querbretter 8 nach oben verschoben sind. Die Widerlager 22 sind innerhalb des Gehäuses 30 in Vertikalführungen (nicht dargestellt) gelagert und treten durch vertikale Erweiterungen des Austrittsschlitzes 44 nach vorne aus dem Gehäuse aus. Die Höhe der Widerlager 22, d.h. der Abstand zwischen ihrer Oberseite und ihrer Unterseite ist größer als die Summe der Brettstärken der Deckbretter 6 und der Querbretter 8, so daß das rechte Widerlager 22c in der oberen Endstellung so weit nach unten ragt, daß sich ein zwischen ihm und dem zugehörigen rechten Schermesser 20c angeordnetes Querbrett 8 am Widerlager 22c abstützt, wenn das rechte Schermesser 20c in Richtung des Widerlagers 22c verschoben wird.

Das Anheben und Absenken der Widerlager 22 erfolgt mit Hilfe von drei Pneumatikzylindern 52, die unterhalb des Gehäuses 30 angeordnet sind und deren nach oben weisende Kolbenstangen 54 über einen Hubarm 55 mit einem der Widerlager 22 verbunden sind. Die Pneumatikzylinder 52 sind über Druckluftleitungen mit steuerbaren Schaltventilen an einen Kessel eines Kompressors (nicht dargestellt) angeschlossen. Die Widerlager 22 lassen sich durch entsprechende Ansteuerung der Schaltventile gemeinsam anheben und absenken. Außerdem können das linke und das mittlere Widerlager 22a und 22b gemeinsam angehoben und abgesenkt werden.

Auf der Oberseite des Gehäuses 30 oder ggf. an einem anderen für eine Bedienungsperson leicht zugänglichen Platz ist ein Steuergerät 56 angeordnet, welches mehrere Betätigungsknöpfe 58 für die Ansteuerung der Schaltventile im Hydraulik- und im Druckluftkreislauf sowie zum Aktivieren der zugeschalteten Hydraulik- bzw. Pneumatikzylinder 48 bzw. 52 aufweist.

Am rechten Rand der Gehäusewand 28 ist weiter ein mit einem Schenkel nach vorne überstehendes verstärktes Winkelprofil 60 starr befestigt, welches beim Entfernen des mittleren Klotzes 10c auf der kürzeren Schmalseite einer Palette 4 mit Hilfe des rechten Schermessers 22c als ortsfestes Widerlagerelement dient, an dem sich das gegen die Gehäusewand 28 anliegende Querbrett 8 mit seiner Stirnseite abstützt. Der Abstand zwischen einer den Schermessern 20 zugewandten Stützfläche 62 des Winkelprofils 60 und der in die gleiche Richtung weisenden Stützfläche des Widerlagers 22c entspricht daher dem Abstand zwischen den entsprechenden Begrenzungsflächen des mittleren und eines der äußeren Klötze 10c und 10a auf der kürzeren Schmalseite einer Euro-Palette 4.

Zum Entfernen eines beschädigten Deckrandbretts 6a oder eines Bodenrandbretts 12a einer Euro-Palette 4 werden das linke und mittlere Widerlager 22a und 22b in die untere Endstellung abgesenkt, während das rechte Widerlager 22c in der oberen Endstellung bleibt. Weiter werden mit Hilfe des Steuergeräts 56 sämtliche Hydraulikzylinder 48 in den Druckölkreislauf zugeschaltet, so daß bei einer Aktivierung alle Schermesser 20a, 20b, 20c in Richtung der Widerlager 22a, 22b, 22c verschoben werden. Anschließend wird die schadhafte Palette 4 so auf die Ablagefläche 26 aufgelegt, daß das beschädigte Randbrett 6a, 12a nach oben weist und vor den Schermessern 20 im wesentlichen parallel zur Gehäusewand 28 ausgerichtet ist. Die Palette 4 wird dann hinten, d.h. an der Gehäusewand 28 etwas angehoben und mit der nach unten gerichteten Breitseitenfläche des beschädigten Randbretts 6a, 12a auf die Oberseite des mittleren und des rechten Schermessers 20b, 20c und des abgesenkten linken und mittleren Widerlagers 22a, 22b aufgelegt und mit ihrer längeren Schmalseite gegen die Gehäusewand 28 geschoben. Daraufhin erfolgt die Aktivierung der Schermesser 20a, 20b, 20c, d.h. mit Hilfe eines Betätigungsknopfs 58 auf dem Steuergerät 56 werden die drei zugeschalteten Hydraulikzylinder 48 mit Drucköl beaufschlagt, woraufhin die Messerträger 32 mit den Schermessern 20a, 20b, 20c in Richtung der zugehörigen Widerlager 22a, 22b, 22c verschoben werden. Die Schermesser 20 gleiten an der Unterseite des beschädigten Randbretts 6a, 12a entlang und dringen genau in die Trennfuge zwischen diesem und den benachbarten Querbrettern 8 ein, wo sie die Verbindungselemente 14 quer zu deren Längsrichtung abscheren. Dabei werden die Querbretter 8 auf ihrer von den Schermessern 20 abgewandten Seite von den drei Widerlagern 22a, 22b, 22c abgestützt, von denen das rechte, in der oberen Endstellung befindliche (22c) auch das beschädigte Randbrett 6a, 12a stützt und ein Ausweichen desselben verhindert. Beim Abscheren der Verbindungselemente 14 wird die Palette um die Stärke der Schermesser 20 nach unten in Richtung der Ablagefläche 26 gedrückt und fällt schließlich auf diese, wenn das letzte Verbindungselement 14 abgeschert ist. Die Schermesser 20 werden dann mittels des Steuergeräts 56 durch entgegengesetzte Beaufschlagung der doppeltwirkenden Hydraulikzylinder 48 in ihre eingezogene Ruhelage zurückgezogen.

Zum Entfernen eines beschädigten Klotzes 10a oder 10b an einer der längeren Schmalseiten einer Euro-Palette 4 werden zuerst die Verbindungselemente 14 zwischen dem Klotz 10a, 10b und dem benachbarten Bodenrandbrett 12a abgeschert, wobei die Palette 4 als erstes mit nach unten weisenden Deckbrettern 6 auf die Ablagefläche 26 gelegt und dann in gleicher Weise, wie zuvor beschrieben, auf die Schermesser 20b und 20c sowie die Widerlager 22a und 22b gehoben wird, bis der beschädigte Klotz 10a, 10b an der Gehäusewand 28 anliegt. Mit Hilfe des Steuergeräts 56 wird in diesem Fall jedoch durch entsprechende Ansteuerung der Schaltventile nur derjenige Hydraulikzylinder 48 mit Drucköl beaufschlagt, dessen Schermesser 20 mit seiner Schneidkante 24 dem beschädigten Klotz 10a, 10b gegenüberliegt, so daß nur dieses Schermesser 20 verschoben wird, während die anderen in ihrer Ruhelage verbleiben. Nach dem Abscheren der Verbindungselemente 14 zwischen dem schadhaften Klotz 10a, 10b und dem benachbarten Bodenrandbrett 12a wird die Palette 4 von den Schermessern 20b, 20c und den Widerlagern 22a, 22b gezogen, das zuvor aktivierte Schermesser 20 in die Ruhelage zurückgezogen und anschließend die Palette 4 umgedreht, so daß die Bodenbretter 12 auf der Ablagefläche 26 aufliegen. Die Palette 4 wird erneut auf die Schermesser 20b, 20c und das linke und mittlere Widerlager 22a, 22b gehoben, die anschließend zusammen mit der Palette 4 um die Stärke der Querbretter 8 in ihre obere Endstellung angehoben werden, in welcher die Schermesser 20 in einer Ebene mit der Trennfuge zwischen den Klötzen 10a, 10b und den benachbarten Querbrettern 8 fluchten. Dann wird wieder dasjenige Schermesser 20 aktiviert, dessen Schneidkante 24 dem schadhaften Klotz 10, 10b gegenüberliegt, und hydraulisch in Richtung des zugehörigen Widerlagers 22 verschoben, wobei die Verbindungselemente 14 in der Trennfuge abgeschert werden.

Nach dem Herabnehmen der Palette 4 von den Widerlagern 22a und 22b kann der beschädigte Klotz 10a, 10b zwischen dem Bodenrandbrett 12a und dem Querbrett 8 herausgezogen und ein neuer Klotz 10a, 10b eingesetzt werden.

Auf die beschriebene Weise lassen sich auch mehrere nebeneinander an den längeren Schmalseiten einer Palette 4 angeordnete Klötze 10a, 10b gleichzeitig entfernen, indem jeweils mehrere Schermesser 20 gemeinsam verschoben werden.

Die beiden mittleren Klötze 10c an den kürzeren Schmalseiten einer Euro-Palette 4 werden mit Hilfe des vom Winkelprofil 60 gebildeten ortsfesten Widerlagerelements entfernt, wobei sich zuerst sämtliche Widerlager 22 in ihrer unteren Endstellung befinden, so daß die Palette 4 mit der Unterseite des gehäuseseitigen Querbretts 8a auf das rechte Schermesser 20c und das rechte Widerlager 22c aufgelegt werden kann, um die Verbindungselemente 14 zwischen dem Klotz 10c und dem Querbrett 8a abzuscheren. Das rechte Widerlager 22c verhindert beim Abscheren dieser Verbindungselemente 14 ein Verschieben des Klotzes 10c, während das ortsfeste Widerlagerelement 60 zur Abstützung der längeren Schmalseite der Palette 4 dient. Zum Abscheren der Verbindungselemente 14 zwischen dem Klotz 10c und dem benachbarten Bodenmittelbrett 12b wird die Palette 4 umgedreht und mit den Deckbrettern 6 auf der Ablagefläche 26 abgelegt, wobei sie mit ihrer längeren Schmalseite am ortsfesten Widerlagerelement 60 anliegt und mit ihrem vorderen Stirnende etwa 40 cm über die Vorderkante des Ablagetischs 16 hinausragt. Anschließend werden die Widerlager 22 in die obere Endstellung verfahren, so daß sich beim nachfolgenden Abscheren der Verbindungselemente sowohl der Klotz 10c als auch das Bodenmittelbrett 12b am rechten Widerlager 22c abstützen kann. Die Palette 4 wird dann durch Kippen über die Vorderkante des Ablagetischs 16 an ihrem der Gehäusewand 28 zugewandten Stirnende um etwa 40 mm angehoben, bis das rechte Schermesser 20 mit der Trennfuge zwischen dem Klotz 10c und dem Bodenmittelbrett 12b fluchtet, woraufhin das rechte Schermesser 20c hydraulisch nach rechts verschoben wird, bis die Verbindungselemente 14 zwischen dem Klotz 10c und dem Bodenmittelbrett 12b abgeschert sind.

## Patentansprüche

1. Verfahren zum Entfernen beschädigter Bauelemente von Paletten, bei welchem einander jeweils benachbarte, durch Nägel, Schrauben oder dergleichen Verbindungselemente zusammengehaltene Bauelemente einer Palette durch gegenseitige Annäherung von mehreren, zwischen die benachbarten Bauelemente eindringenden und die Verbindungselemente abscherenden Schermessern einerseits und mindestens einem zur Abstützung mindestens eines Teils der Bauelemente dienenden Widerlager andererseits voneinander getrennt werden, **dadurch gekennzeichnet, daß** die Schermesser (20a, 20b, 20c) in Abhängigkeit von der Anzahl und Lage der abzuscherenden Verbindungselemente (14) einzeln oder gemeinsam in Annäherungsrichtung gegenüber der Palette (4) verschoben werden.

2. Verfahren nach Anspruch 1, **dadurch gekennzeichnet, daß** mehrere Schermesser (20a, 20b, 20c) gemeinsam verschoben werden, um die Verbindungselemente (14) an sämtlichen in einer Ebene angeordneten Verbindungsstellen zwischen dem beschädigten Bauelement (6a; 12a) und mehreren benachbarten Bauelementen (8a, 8b, 8c; 10a, 10b) gleichzeitig abzuscheren.

3. Verfahren nach Anspruch 1 oder 2, **dadurch gekennzeichnet, daß** zwei oder mehr Schermesser (20a, 20b, 20c) gemeinsam verschoben werden, um die Verbindungselemente (14) an zwei oder mehr in Bewegungsrichtung hintereinander angeordneten Verbindungsstellen gleichzeitig abzuscheren.

4. Verfahren nach einem der Ansprüche 1 bis 3, **dadurch gekennzeichnet, daß** beim Entfernen eines Deckrandbretts (6a) oder eines Bodenrandbretts (12a) einer Palette (4) mehrere hintereinander angeordnete Schermesser (20a, 20b, 20c) gemeinsam in an einer Breitseitenfläche des Deckrandbretts (6a) oder des Bodenrandbretts (12a) entlang in dessen Längsrichtung verschoben werden.

5. Verfahren nach einem der Ansprüche 1 bis 4, **dadurch gekennzeichnet, daß** beim Entfernen eines Klotzes (10a; 10b; 10c) nacheinander die Verbindungselemente (14) zwischen dem Klotz (10a; 10b; 10c) und zwei benachbarten, auf entgegengesetzten Seiten des Klotzes (10a; 10b; 10c) angeordneten Bauelementen (8a, 12a; 8b, 12a; 8a, 12b) abgeschert werden, wobei jeweils nur eines der Schermesser (20) verschoben wird.

6. Verfahren nach einem der Ansprüche 1 bis 5, **dadurch gekennzeichnet, daß** die Palette (4) zum Abscheren der Verbindungselemente (14) an einem Teil der Verbindungsstellen auf mindestens einen Teil der Schermesser (20) und/oder der Widerlager (22) aufgelegt wird.

7. Verfahren nach Anspruch 6, **dadurch gekennzeichnet, daß** mindestens ein Teil der Widerlager (22) angehoben wird, um die Schermesser (22) in die Ebene einer Trennfuge zwischen zwei benachbarten Bauelementen (8, 10) zu bringen.

8. Vorrichtung zum Entfernen beschädigter Bauelemente von Paletten, bei welcher einander jeweils benachbarte, durch Nägel, Schrauben oder dergleichen Verbindungselemente zusammengehaltene Bauelemente einer Palette durch gegenseitige Annäherung von mehreren, zwischen die benachbarten Bauelemente eindringenden und die Verbindungselemente abscherenden Schermessern einerseits und einem zur Abstützung mindestens eines Teils der Bauelemente dienenden Widerlager andererseits voneinander getrennt werden, **dadurch gekennzeichnet, daß** die Schermesser (20a, 20b, 20c) in Abhängigkeit von der Anzahl und Lage der abzuscherenden Verbindungselemente (14) einzeln oder gemeinsam in Annäherungsrichtung gegenüber der Palette (4) verschiebbar sind.

9. Vorrichtung nach Anspruch 8, **dadurch gekennzeichnet, daß** die Schermesser (20a, 20b, 20c) in Annäherungsrichtung hintereinander angeordnet sind.

10. Vorrichtung nach Anspruch 8 oder 9, **gekennzeichnet durch** eine Mehrzahl von Widerlagern (22a, 22b, 22c), die jeweils einer Schneidkante (24) der Schermesser (20a, 20b, 20c) gegenüberliegen.

11. Vorrichtung nach einem der Ansprüche 8 bis 10, **gekennzeichnet durch** eine Hubvorrichtung zum Anheben und/oder Absenken einer Palette (4) in einer zur Annäherungsrichtung senkrechten Richtung.

12. Vorrichtung nach Anspruch 11, **dadurch gekennzeichnet, daß** die Hubvorrichtung mindestens einen Teil der Widerlager (22) umfaßt, auf deren Oberseite sich ein Bauelement der Palette (4) auflegen läßt.

13. Vorrichtung nach Anspruch 12, **dadurch gekennzeichnet, daß** die Widerlager (22) zwischen zwei Endstellungen vertikal verfahrbar sind und daß die Oberseiten der Schermesser (20) und der Widerlager (22) in der unteren Endstellung miteinander fluchten.

## Claims

1. Method of removing damaged components from pallets, in the case of which adjacent components belonging to a pallet and held together by nails, screws or similar connecting elements, are separated from one another by mutual approach of, on the one hand, a plurality of shearing cutters, which penetrate between the adjacent components and shear off the connecting elements, and, on the other hand, at least one abutment, which serves for supporting at least some of the components, **characterized in that**, in dependence on the number and position of the connecting elements (14) which are to be sheared off, the shearing cutters (20a, 20b, 20c) are displaced individually or together in the approach direction in relation to the pallet (4).

2. Method according to Claim 1, **characterized in that** a plurality of shearing cutters (20a, 20b, 20c) are displaced together in order simultaneously to shear off the connecting elements (14) at all of the connecting locations arranged in one plane between the damaged component (6a; 12a) and a plurality of adjacent components (8a, 8b, 8c; 10a, 10b).

3. Method according to Claim 1 or 2, **characterized in that** two or more shearing cutters (20a, 20b, 20c) are displaced together in order simultaneously to shear off the connecting elements (14) at two or more connecting locations arranged one behind the other in the movement direction.

4. Method according to one of Claims 1 to 3, **characterized in that**, when a top edge board (6a) or a bottom edge board (12a) of a pallet (4) is removed, a plurality of shearing cutters (20a, 20b, 20c) arranged one behind the other are displaced together along a broad-side surface of the top edge board (6a) or of the bottom edge board (12a), in the longitudinal direction thereof.

5. Method according to one of Claims 1 to 4, **characterized in that** when a block (10a; 10b; 10c) is removed, one after the other, the connecting elements (14) between the block (10a; 10b; 10c) and two adjacent components (8a, 12a; 8b, 12a; 8a, 12b) arranged on opposite sides of the block (10a; 10b; 10c) are sheared off, in each case only one of the shearing cutters (20) being displaced.

6. Method according to one of Claims 1 to 5, **characterized in that**, for shearing off the connecting elements (14) at some of the connecting locations, the pallet (4) is positioned on at least some of the shearing cutters (20) and/or of the abutments (22).

7. Method according to Claim 6, **characterized in that** at least some of the abutments (22) are raised in order to move the shearing cutters (20) into the plane of the separating joint between two adjacent components (8, 10).

8. Apparatus for removing damaged components from pallets, in the case of which adjacent components belonging to a pallet and held together by nails, screws or similar connecting elements, are separated from one another by mutual approach of, on the one hand, a plurality of shearing cutters, which penetrate between the adjacent components and shear off the connecting elements, and, on the other hand, an abutment, which serves for supporting at least some of the components, **characterized in that**, in dependence on the number and position of the connecting elements (14) which are to be sheared off, the shearing cutters (20a, 20b, 20c) can be displaced individually or together in the approach direction in relation to the pallet (4).

9. Apparatus according to Claim 8, **characterized in that** the shearing cutters (20a, 20b, 20c) are arranged one behind the other in the approach direction.

10. Apparatus according to Claim 8 or 9, **characterized by** a plurality of abutments (22a, 22b, 22c), which are each located opposite a cutting edge (24) of the shearing cutters (20a, 20b, 20c).

11. Apparatus according to one of Claims 8 to 10, **characterized by** a lifting apparatus for raising and/or lowering a pallet (4) in a direction perpendicular to the approach direction.

12. Apparatus according to Claim 11, **characterized in that** the lifting apparatus comprises at least some of the abutments (22), on the top side of which it is possible to position a component of the pallet (4).

13. Apparatus according to Claim 12, **characterized in that** the abutments (22) can be displaced vertically between two end positions, and **in that** the top sides of the shearing cutters (20) and of the abutments (22) are aligned with one another in the bottom end position.

## Revendications

1. Procédé pour enlever des éléments endommagés de palettes, dans lequel des éléments voisins d'une palette, maintenus ensemble par des clous, des vis ou des éléments de connexion similaires sont séparés les uns des autres par rapprochement mutuel de plusieurs lames de cisaillement pénétrant entre les éléments voisins et cisaillant les éléments de connexion d'une part et d'au moins une butée servant au support d'au moins une partie des éléments d'autre part, **caractérisé en ce que** les lames de cisaillement (20a, 20b, 20c) sont déplacées en fonction du nombre et de la position des éléments de connexion (14) à cisailler individuellement ou en commun dans la direction de rapprochement par rapport à la palette (4).

2. Procédé selon la revendication 1, **caractérisé en ce que** plusieurs lames de cisaillement (20a, 20b, 20c) sont déplacées en commun afin de cisailler simultanément les éléments de connexion (14) sur tous les points de connexion disposés dans un plan entre l'élément endommagé (6a ; 12a) et plusieurs éléments voisins (8a, 8b, 8c ; 10a, 10b).

3. Procédé selon la revendication 1 ou 2, **caractérisé en ce que** deux lames de cisaillement ou plus (20a, 20b, 20c) sont déplacées en commun afin de cisailler simultanément les éléments de connexion (14) sur deux points de connexion ou plus disposés les uns derrière les autres dans la direction du mouvement.

4. Procédé selon l'une quelconque des revendications 1 à 3, **caractérisé en ce que**, pour enlever une planche de bord supérieure (6a) ou une planche de bord inférieure (12a) d'une palette (4), plusieurs lames de cisaillement disposées les unes derrière les autres (20a, 20b, 20c) sont déplacées en commun contre une surface d'un côté large de la planche de bord supérieure (6a) ou de la planche de bord inférieure (12a) dans une direction longitudinale de celles-ci.

5. Procédé selon l'une quelconque des revendications 1 à 4, **caractérisé en ce que**, pour enlever un plot (10a ; 10b ; 10c), les éléments de connexion (14) entre le plot (10a ; 10b ; 10c) et deux éléments (8a, 12a ; 8b, 12a ; 8a, 12b) disposés sur des côtés opposés du plot (10a ; 10b ; 10c) sont cisaillés les uns derrière les autres, seulement l'une des lames de cisaillement (20) étant déplacée à chaque fois à cet effet.

6. Procédé selon l'une quelconque des revendications 1 à 5, **caractérisé en ce que** la palette (4) est placée sur au moins une partie des lames de cisaillement (20) et/ou des butées (22) pour le cisaillement des éléments de connexion (14) au niveau d'une partie des points de connexion.

7. Procédé selon la revendication 6, **caractérisé en ce qu'**au moins une partie des butées (22) est soulevée afin d'amener les lames de cisaillement (20) dans le plan d'une ligne de joint entre deux éléments voisins (8, 10).

8. Dispositif pour enlever des éléments endommagés de palettes, dans lequel des éléments voisins d'une palette, maintenus ensemble par des clous, des vis ou des éléments de connexion similaires sont séparés les uns des autres par rapprochement mutuel de plusieurs lames de cisaillement pénétrant entre les éléments voisins et cisaillant les éléments de connexion d'une part et d'une butée servant au support d'au moins une partie des éléments d'autre part, **caractérisé en ce que** les lames de cisaillement (20a, 20b, 20c) peuvent être déplacées en fonction du nombre et de la position des éléments de connexion (14) à cisailler individuellement ou en commun dans la direction de rapprochement par rapport à la palette (4).

9. Dispositif selon la revendication 8, **caractérisé en ce que** les lames de cisaillement (20a, 20b, 20c) sont disposées les unes derrière les autres dans la direction du rapprochement.

10. Dispositif selon la revendication 8 ou 9, **caractérisé par** une pluralité de butées (22a, 22b, 22c) qui sont à chaque fois en regard d'une arête de coupe (24) des lames de cisaillement (20a, 20b, 20c).

11. Dispositif selon l'une quelconque des revendications 8 à 10, **caractérisé par** un dispositif de levage pour soulever et/ou abaisser une palette (4) dans une direction perpendiculaire à la direction de rapprochement.

12. Dispositif selon la revendication 11, **caractérisé en ce que** le dispositif de levage comprend au moins une partie des butées (22) sur la face supérieure desquelles on peut poser un élément de la palette (4).

13. Dispositif selon la revendication 12, **caractérisé en ce que** les butées (22) sont déplaçables verticalement entre deux positions extrêmes, et **en ce que** les faces supérieures des lames de cisaillement (20) et des butées (22) sont mutuellement en affleurement dans la position extrême inférieure.
